(19) Europäisches Patentamt

European Patent Office

Office européen des brevets

(11) EP 1 610 438 A2

(12) EUROPEAN PATENT APPLICATION

(43) Date of publication:
28.12.2005 Bulletin 2005/52

(51) Int Cl.⁷: **H02J 7/00**, H01M 10/46

(21) Application number: 05013283.6

(22) Date of filing: 20.06.2005

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **21.06.2004 KR 2004045983**

(71) Applicant: **Artrang Co., Ltd.**
**131-878 Seoul (KR)**

(72) Inventors:
• **Lee, Sang-Shin**
**Seongnam-city 462-826, Gyeonggi-do (KR)**

• **Song, Jin-Su**
**Anyang-city 430-801 Gyeonggi-do (KR)**
• **Shim, Woo-Ju**
**Seongnam-city 461-190 Gyeonggi-do (KR)**
• **Cheon, Ki-Cheol**
**138-040 Seoul (KR)**

(74) Representative: **Molnia, David**
**df-mp Dörries, Frank-Molnia, Pohlman,**
**Trifstrasse 13**
**80538 München (DE)**

(54) **Mobile charger**

(57)     Disclosed herein is a convenient and economical mobile charger, which is small enough to be held in one hand and can electrically charge a portable electronic device by using an embedded secondary electrical cell to which electric power is supplied, particularly through an external connector functioning to transfer data to/from the electronic device, whereby the portable electronic device can be charged with improved convenience, anytime and anywhere.

[FIG. 1]

**Description**

**RELATED APPLICATIONS**

The present disclosure relates to subject matter contained in priority Korean Application No. 10-2004-0045983, filed on June 21, 2004, which is herein expressly incorporated by reference in its entirety.

**BACKGROUND OFTHE INVENTION**

*Field of the Invention*

The present invention relates to a mobile charger. More particularly, the present invention relates to a convenient and economical mobile charger, which is small enough to be held in one hand and can electrically charge a portable electronic device by using an embedded secondary electrical cell to which electric power is supplied, particularly through an external connector functioning to transfer data to/from the electronic device, whereby the portable electronic device can be charged with improved convenience, anytime and anywhere.

*Description of the Related Art*

A Mobile or cellular phone, which may now be one of the most indispensable necessities of life, has evolved from a simple device for communication to a catalystic form of/for entertainment, including games, reproduction of music and moving pictures, wireless intemet connection, digital camera and/or camcorder functions, etc. With a great increase in communication traffic and great development towards high performance and high- and multi-functionality, mobile phones have increasingly required higher capacity batteries.

Leading to the advent of digital mobile phones and laptop computers for wireless internet access, scientist and engineers' efforts to provide the quality exchange of voice, picture and text information without time and space restrictions have brought about great advances in the communication field. For example, popularly commercialized is a technology which allows a mobile phone to have access to an intemet gateway, to download various content thereto and to consume the content

For the mass production of a mobile phone which not only incorporates the functions of laptop computers therein, but also can realize picture information thereon, a highly integrated electronic circuits and an increased communication speed are indispensable, requiring an increase in driving power. Thus, there is a need for a mobile phone battery that has high capacity and can be easily recharged.

In order to solve the problem of increasing battery consumption, secondary electrical cells have been suggested. A secondary electrical cell is a rechargeable battery that converts chemical energy into electrical energy and vice versa by a reversible chemical reaction. Representative of practically used batteries are nickel-cadmium batteries, nickel-hydrogen metal batteries, lithium ion batteries, and NAS batteries. Particularly, lithium ion batteries are preferred because they are excellent in both volumetric and gravimetric energy density and afford light weight and compactness to devices provided therewith.

Usually, a charger, used in home, for recharging batteries of mobile phones comprises a stationary main body and an AC adaptor. When a mobile phone having a battery is mounted on the stationary main body, electricity is supplied via a battery contact in the battery. However, such a charger is inconvenient to carry during traveling or walking and requires AC 220V or 110V to provide an electric charge. In addition, it is impossible to quickly charge batteries with the charger.

As for a quick charger, which is available in, for example, convenience stores, it incurs higher costs than does a charger in home. Moreover, because batteries for different kinds of mobile phones are different in capacity, quick chargers supply excessive currents and thereby charge batteries in excess of their capacities, suffering from the disadvantage of generating heat in the batteries or giving rise to a reduction in life span or a malfunction. Particularly, when being charged in the quick charger, the mobile phone cannot be used.

A disposable charger currently in use cannot guarantee a communication time longer than about two minutes. Accordingly, mobile phones, when being charged using such a disposable charger, cannot perform the high functions embedded therein, such as digital camera or camcorder functions. Moreover, a fresh dry battery must be required every charge, incurring a high cost

Batteries of mobile phones are different in size and electrical standard from one manufacturer to another. In spite of being produced by the same manufacturer, mobile phones differ in dimension and electrical standard from one another if they are different models. Accordingly, batteries thereof are not compatible with one another.

In addition to mobile phones, the problems described above are true of batteries for digital cameras, MP3 players, and other portable electronic products.

## SUMMARY OF THE INVENTION

Leading to the present invention, intensive and thorough research into mobile chargers, conducted by the present inventors, resulted in the finding that a combination of a small housing containing a rechargeable secondary electrical cell and a connector applicable to any model of portable electronic device is highly convenient for electrically charging portable electronic devices, including mobile phones, MP3 players, and other devices.

It is an object of the present invention to provide a small and light mobile charger, which is designed to be carried in the hand or in a pocket, or worn around the neck while traveling or walking.

It is another object of the present invention to provide a technology by which portable electronic devices can be electrically charged stably and safely.

It is a further object of the present invention to provide a mobile charger which employs a secondary electrical cell to charge portable electronic devices as well as to supply operating power to the electronic devices, thereby allowing the electronic devices to be used during charging and preventing the interruption of operation and data loss due to the exchange of batteries.

It is a still further object of the present invention to provide a connector structure applicable to various portable electronic devices made by various manufacturers.

It is still another object of the present invention to provide a mobile charger structure in which a connecting cable for connecting the mobile charger to an external connector of a portable electronic device is integrated with a housing, thereby removing the inconvenience of a separate connecting cable.

In accordance with the present invention, the above objects could be accomplished by the provision of a mobile charger, comprising: a housing, composed of an upper body and a lower body, which are fixed to each other through a fixing engagement, having a size small enough to carry in one hand; a secondary electrical cell embedded within the housing: an inner circuit unit, installed within the housing, comprising: a charging circuit unit for supplying external electrical power to the secondary electrical cell, a protection circuit module for protecting the secondary cell, a DC/DC converter circuit module for boosting the voltage of the secondary cell to a predetermined voltage, an output circuit unit for converting the DC voltage boosted in the DC/DC converter circuit module to a predetermined constant voltage/current; a first connection port, formed in one side of the housing, electrically connected to the inner circuit unit, in which a groove is formed for insertion fitting with a protrusion end of an input cable for charging the secondary electrical cell; a second connection port, formed in one side of the housing, electrically connected to the inner circuit unit, in which a groove is formed for insertion fitting to a cylindrical protrusion end of an output cable for supplying charged power of the secondary electrical cell to a portable electronic device; and a charge indicator, formed on a surface of the housing, for indicating a charged state of the electronic device by detecting the charging current flowing out of the inner circuit unit.

Another aspect of the present invention provide a mobile charger, comprising: a housing, composed of an upper body and a lower body, which are fixed to each other through a fixing engagement, having a size small enough to carry within one hand; a secondary electrical cell embedded within the housing:

an inner circuit unit, installed within the housing, comprising: a charging circuit unit for supplying external electrical power to the secondary electrical cell, a protection circuit module for protecting the secondary cell, a DC/DC converter circuit module for boosting the voltage of the secondary cell to a predetermined voltage, an output circuit unit for converting the DC voltage, boosted in the DC/DC converter circuit module, to a predetermined constant voltage/current; a first connection port, formed in one side of the housing, electrically connecting to the inner circuit unit, in which a groove is formed for insertion fitting with a protrusion end of an input cable for charging the secondary electrical cell; a second connection port, formed integrally with the housing, electrically communicating with the inner circuit unit and directly connecting to an external connector of a portable electronic device so as to supply charged power of the secondary electrical cell to the portable electronic device; and a charge indicator, formed on a surface of the housing, for indicating a charged state of the electronic device by detecting the charging current flowing out of the inner circuit unit

In the mobile charger of the present invention, either the upper housing body or the lower housing body is defined as a first housing body when the charge indicator is formed thereon, and the other housing body is defined as a second housing body, the fixing engagement is a screw, which protrudes from the second housing body, and the second housing body is provided with at least three protrusions thereon, so as to protect the surface thereof, and an information notice attached thereto.

Also, the first housing body has the charge indicator formed thereon and the second housing body has a switch unit thereon for switching on/off output power of the mobile charger, said charge indicator performing an indicating function when said switch unit is in an on state and not performing the indicating function when said switch unit is in an off state.

In the mobile charger, the charge indicator is composed of light emitting diodes and, during the supply of the charged power of the secondary electrical cell to the portable electronic device, emits red light in the case of quick charging, green light in the case of the completion of charging, and yellow light in the case that the power of the secondary cell is lower than a predetermined value.

In the mobile charger, the first connection port has connection pins in the groove and is provided with a protection piece for protecting the groove and the connection pins, said protection piece being fixed to the housing at one end while being detachably attached to the housing at the other end, and being provided with a grip on the free end, said grip being pulled to open the input connection port to insert the input cable therein so as to charge the secondary electrical cell.

The input cable of the present invention is a standard 24-pin type charging cable which has a small housing at one end and is electrically connected at the other end to an external adaptor, said small housing comprising a protrusion end of a standard 24-pin type for insertion fitting to the groove, a press holder for restricting the insertion of the protrusion end into the groove, and a charge indicator for indicating the charged state of the secondary electrical cell.

Preferably, the connection pins formed in the first connection port are standard 24-pin type.

In another aspect of the present invention, the mobile charger further comprises an outer cable to be insertion fitted into the groove of the second connection port, said outer cable having a small housing at one end and a cylindrical protrusion end at the other end, said small housing comprising a protrusion end to be inserted into the external connector of the portable electronic device, a press holder for restricting the insertion into the external connector, and a charge indicator for indicating charging progress upon the supply of electrical power from the secondary electrical cell, said small housing being connected with an external connector responsible for the transfer of data to/from, and the supply of power to, the portable electronic device, said cylindrical protrusion end having an outer diameter smaller than an inner diameter of the groove so as to be inserted into the groove.

In the mobile charger, the output cable is either an 18-pin type or a 24-pin type, and is used depending on the pin type of the external connector of the portable electronic device.

In a further aspect of the present invention, the second connection port is integrated with the housing and embedded in the housing. Also, the second connection port is designed to move in any direction and to readily be pushed into and pulled out of the housing, thereby being freely connected to the external connector of the portable electronic device. The second connection port comprises a small housing that includes a protrusion end to be insertion fitted into the external connector of the portable electronic device and a press holder for restricting the insertion of the protrusion end.

The mobile charger in accordance with the present invention is characterized in that the output circuit unit within the inner circuit unit converts DC voltage boosted in the DC/DC converter circuit module to a constant voltage/current necessary for the drive power for the mobile phone and supplies the constant voltage/current as a drive power through the output cable and the external connector of the portable electronic device to an inner circuit of the portable electronic device, whereby the portable electronic device can be charged and perform its characteristic functions even when a battery mounted on the electronic device is removed therefrom.

## BRIEF DESCRIPTION OF THE DRAWINGS

The above and other objects, features and advantages of the present invention will be more clearly understood from the following detailed description taken in conjunction with the accompanying drawings, in which:

FIG. 1 is a schematic circuit diagram showing the circuit structure of a mobile charger in accordance with an embodiment of the present invention;

FIG. 2 is a circuit diagram of a charging circuit unit for charging a secondary electrical cell in accordance with an embodiment of the present invention;

FIG. 3 is a circuit diagram of a DC/DC converter circuit module in accordance with an embodiment of the present invention;

FIG. 4 is a circuit diagram of an output circuit unit for supplying electric power to a portable electronic device, in accordance with an embodiment of the present invention;

FIG. 5 is a front view showing a mobile charger in accordance with a first embodiment of the present invention;

FIG. 6 is a front view showing a mobile charger in accordance with a second embodiment of the present invention;

FIG. 7 is a side view showing a mobile charger in accordance with a first embodiment of the present invention;

FIG. 8 is a side view showing a mobile charger in accordance with a second embodiment of the present invention;

FIG. 9 is a side view of a mobile charger in accordance with an embodiment of the present invention;

FIG. 10 is a perspective view showing a rear side of a mobile charger in accordance with a first embodiment of the present invention;

FIG. 11 is a perspective view showing a rear side of a mobile charger in accordance with a second embodiment of the present invention;

FIG. 12 is a view showing the size of a mobile charger in accordance with a first embodiment of the present invention;

FIG. 13 is a view showing the size of a mobile charger in accordance with a second embodiment of the present invention;

FIG. 14 is a view showing a mobile phone that is being electrically charged, in accordance with a first embodiment of the present invention;

FIG. 15 is a view showing a mobile phone that is being electrically charged, in accordance with a second embodiment of the present invention;

FIG. 16 is a perspective view showing a mobile charger that is being electrically charged, in accordance with a first embodiment of the present invention;

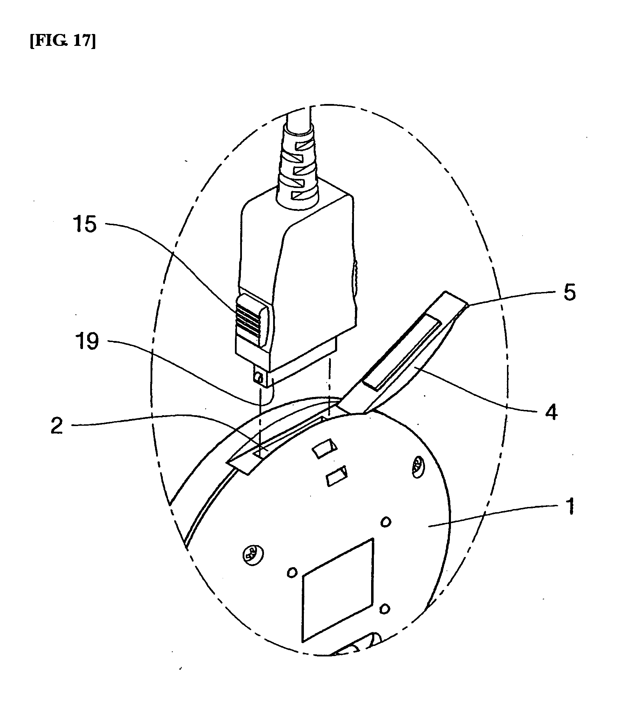

FIG. 17 is a partially enlarged perspective view showing an input connection module provided with a protection member;

FIG. 18 is a perspective view showing an output cable (18-pin type) in accordance with a first embodiment of the present invention;

FIG. 19 is a perspective view showing an outer cable (24-pin type) in accordance with a second embodiment of the present invention;

FIG. 20 is an input cable in accordance with the present invention;

FIG. 21 is a perspective view showing a mobile phone that is being operated even when its battery has been removed provided that the mobile charger has been applied thereto, in accordance with the first embodiment of the present invention;

FIG. 22 is a perspective view showing a mobile phone that is being operated even when its battery has been removed provided that the mobile charger has been applied thereto, in accordance with the second embodiment of the present invention;

FIG. 23 is a perspective view showing a dual charging scheme, in which a mobile phone can be charged using two mobile chargers connected in series.

## DETAILED DESCRIPTION OF THE PREFERRED EMBODIMENT

Reference will be made to the accompanying drawings to describe the preferred embodiments of the present invention. In the specification, the explanation of well-known structures and functions, which are particulars obvious to those skilled in the art, for example, well-known circuit elements of the inner circuit and their functions, will be omitted when being judged that they make the principle of the present invention unclear.

It should be understood that the preferred embodiments of the present invention are described in detail with regard to mobile phones only for convenience's sake and the spirit of the present invention is applicable to digital cameras, MP3 players, and other portable electronic products.

A description will be first given of an inner circuit diagram of the present invention and then an outer housing and a connector joining structure or type. For the outer housing and the connector joining structure, two embodiments are provided in the present invention. In the first embodiment, an output cable for providing electric power from a secondary electrical cell for a mobile phone battery is separated from a charger housing and communicates with a mobile phone at one end and with the charger housing at the other end. In the second embodiment, the output cable is structured not to be separated from but to be integrated with the housing for convenience sake. However, the principle and spirit of the present invention is the same both in the first and in the second embodiment

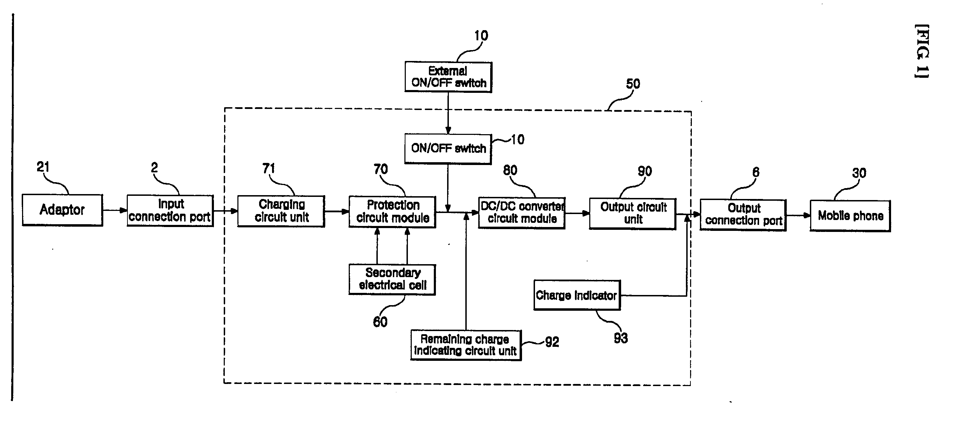

With reference to FIG. 1, there is a schematic circuit diagram showing the circuit structure of a mobile charger, including an inner circuit unit 50, in accordance with an embodiment of the present invention. As seen in FIG. 1, a charge-output system comprises an adaptor 21, an input connection port 2, a charging circuit unit 71, a protection circuit module 70, a lithium ion secondary battery 60, an ON/OFF switch 10, a remaining power indicating circuit unit 92, a DC/DC converter circuit module 80, an output circuit unit 90, a charge indicating circuit unit 93, an output connection port 6, and a mobile phone 30, which are electrically connected.

Through the adaptor 21 connecting to the input connection port 2, an external power source is provided for charging the secondary electrical cell 60. The external power is not directly input into the secondary electrical cell 20, but is designed to pass through the charging circuit unit 71 and the protection circuit module (PCM) 70 before being input into the secondary electrical cell. Likewise, when the secondary electrical cell is discharged for charging the mobile phone battery, the electricity is transferred via the PCM 70. This circuit architecture is to protect the inner circuit unit from the following accidents: when the secondary electrical cell 60 is charged in excess of its allowable voltage, the organic electrolyte solution undergoes decomposition, giving rise to explosion or overheating, on the other hand, when the secondary electrical cell 60 is overly discharged, an increase arise in internal resistance, which decreases the performance or stability of the cell. Also, the PCM 70 stops discharging when an abnormal current flows due to mechanical errors as well as stops charging when a large amount of currents flow due to the formation of an external short circuit in the battery pack.

The DC/DC converter circuit module 80 functions to elevate the voltage of the embedded secondary electrical cell 60 to a predetermined voltage. The output circuit unit 90 is responsible for outputting a constant voltage/current chargeable to a lithium ion battery mounted on the mobile phone. While the power remaining in the secondary electrical cell 60 is represented by the remaining power indicating circuit 92, the charge indicating circuit unit 93 detects the charge current flowing from the output circuit unit 90 to the output connection port 6 to indicate the charged state of the battery.

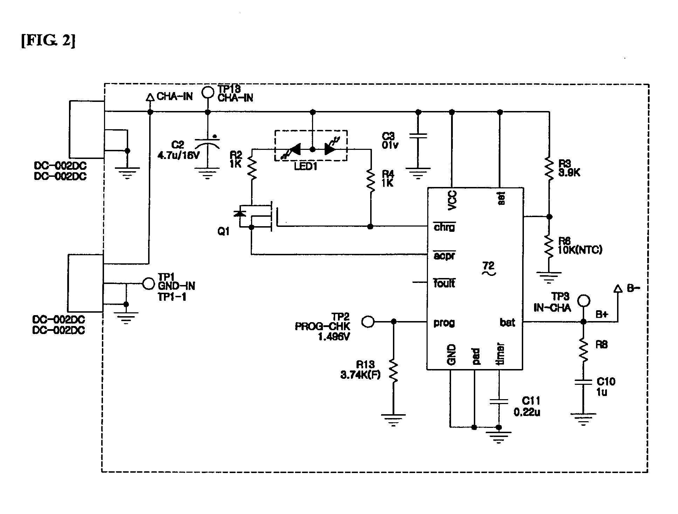

With reference to FIG. 2, there is a circuit diagram showing the charging circuit unit 71 in detail. While maintaining a voltage/current of about 5V/2A input from the adaptor 21 at a charge voltage/current of about 4.2V/400mA, the charging circuit unit 71 functions to charge the secondary electrical cell.

When being connected to an external power source through the external AC/DC adaptor 21, the charge circuit unit takes advantage of a charge unit 72, an IC (integrated circuit), in charging the secondary electrical cell 60 embedded therein. As an indicator for the charged state of the secondary electrical cell, an LED 73 emits red light when the secondary electrical cell is being charged with one tenth of a predetermined current (about 40 mA) or more and green light when the secondary electrical cell is being charged with less than one tenth of the predetermined current (for example, in approximation, 40mA > current being charged: red, 40mA < current being charged: green).

In the charge circuit unit, a resistor R6 (NTC) serves as a thermistor for controlling the charge unit 72 in response to ambient temperature. For instance, the resistor R6 may be preset to allow the charge unit to work in a temperature range from 0 to 50°C. Having the function of setting a charging current, a resistor R13 maintains a charging current at the level of 400mA.

In the meantime, a capacitor C11 plays a role in setting a charging time period. Experimental data demonstrates that a charging time of about 6.6 hours is preferred. Accordingly, the capacitor C11 also functions to interrupt the power.

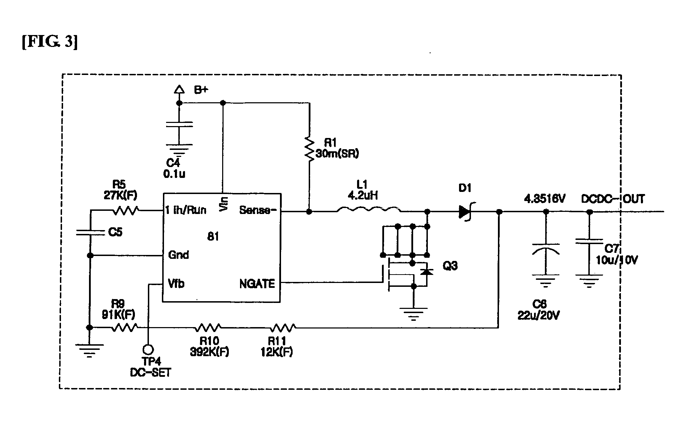

FIG. 3 depicts an example of the DC/DC converter circuit module 80. The DC/DC converter circuit module 80 comprises a DC/DC converter unit 81, composed of an IC, and a plurality of circuit elements and is designed to prevent the output circuit unit 90 from working at less than about 4.35 V, thus functioning to set the DC/DC output of the charging power supplied from the secondary electrical cell 60 at about 4.35V.

The output voltage can be calculated from R9, R01 and R11, as represented by the following equation:

$$\text{Output Voltage} = 1+\{(R10+R11)/R9\} \times 0.8 \qquad \text{Eq. 1}$$

If the experimental values given in the diagram, e.g., R9=91K, R10=392K, R11=12K are substituted into the equation, an output voltage of 4.3156V is obtained.

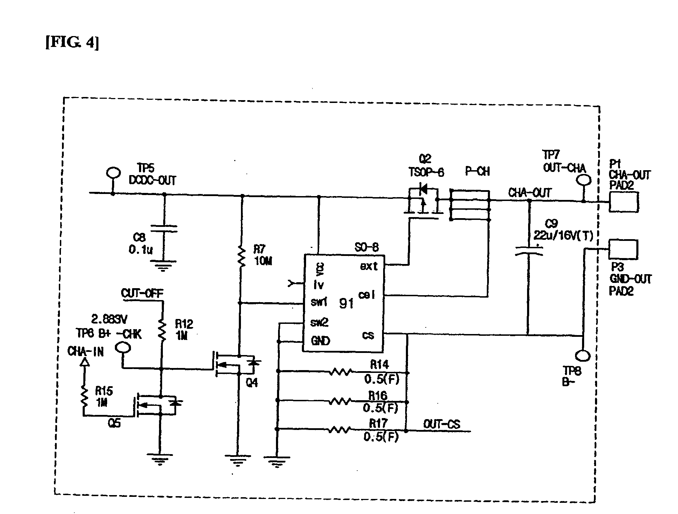

With reference to FIG. 4, there is a detailed circuit diagram of the output circuit unit 90. As seen in the diagram, the output circuit unit 90 comprises an output unit 91 composed of an IC, and performs constant voltage and current control for the output voltage of about 4.35V from the DC/DC converter circuit module 80 to supply a predetermined constant voltage and current to the output connection port 6, so as to supply predetermined power (approximately 4.2V, 600mA). In this way, quick charging is realized. In general, quick charging is performed in such a manner that charging is conducted with a constant current at an initial stage and when a charged voltage reaches a predetermined voltage, charging is conducted at a constant voltage until a full charge is realized. In this output circuit unit 90, the quick charging is conducted according to a preset control of the output unit IC 91.

In this diagram, when approximately 4.3156V are output from the DC/DC converter circuit module 80 as described above, a transistor Q4 is turned on and thus is in a normal working/ready state. When its voltage is decreased below 3V, the battery (the embedded secondary electrical cell) may be damaged. Thus, when the battery is discharged, thus lowering its output voltage to 3V or less, the transistor Q4 is turned off to stop the discharge (3V-CUT OFF). On the other hand, upon input through the AC/DC adaptor 21, a transistor Q5 is turned on to cut the output function of the output unit 91. In this case, an external power source can be used for the execution of a dual charging mode in which both the battery of the mobile phone 30 and the secondary electrical cell 60 are simultaneously charged, without drawing the charged power from the secondary electrical cell 60 according to an input priority principle.

As seen in the figure, resistors R14, R16 and R17 are designed to function to identify charge currents.

Below, both the first and the second embodiment will be explained with emphasis on the outer housing and connector joining structure of the present invention.

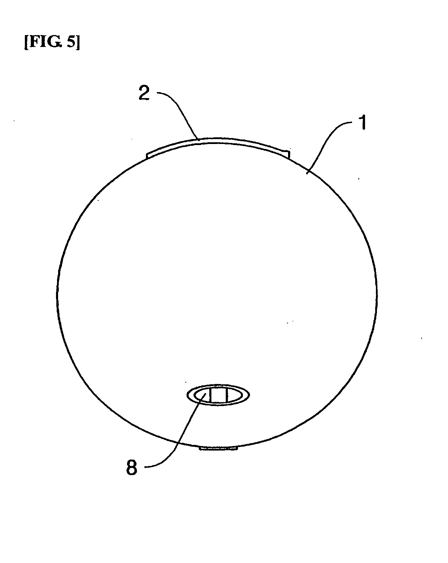

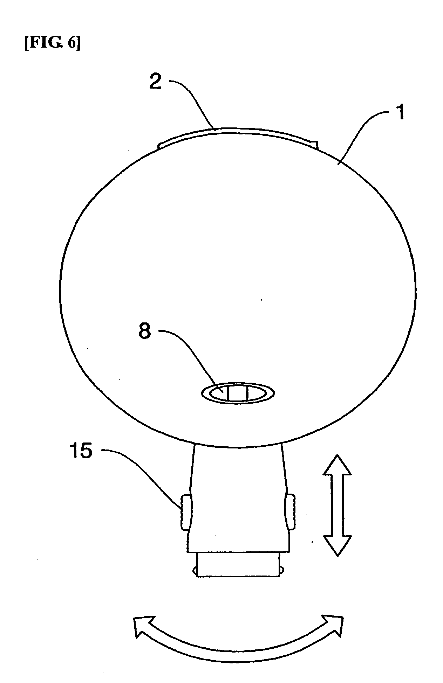

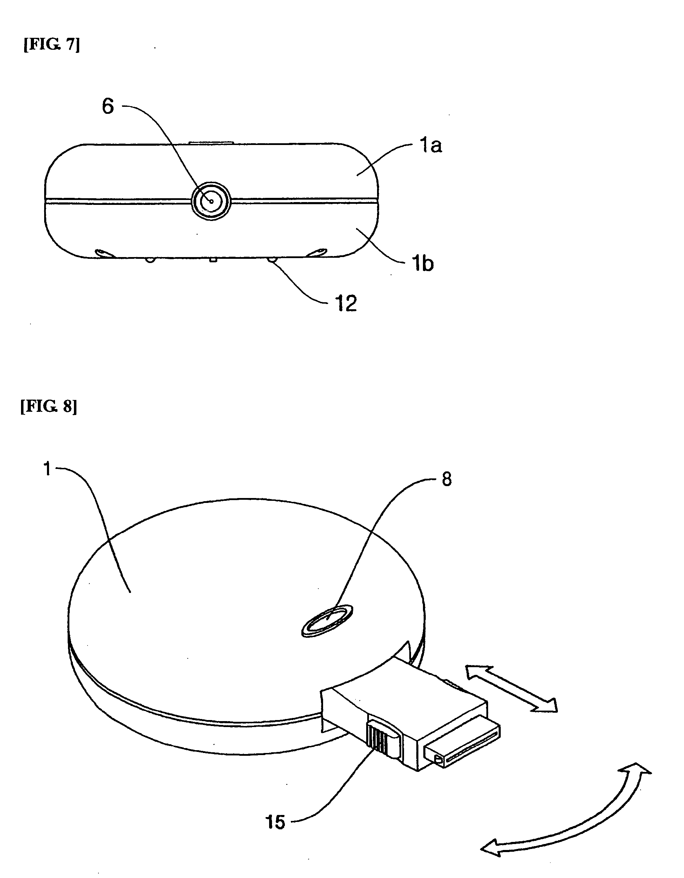

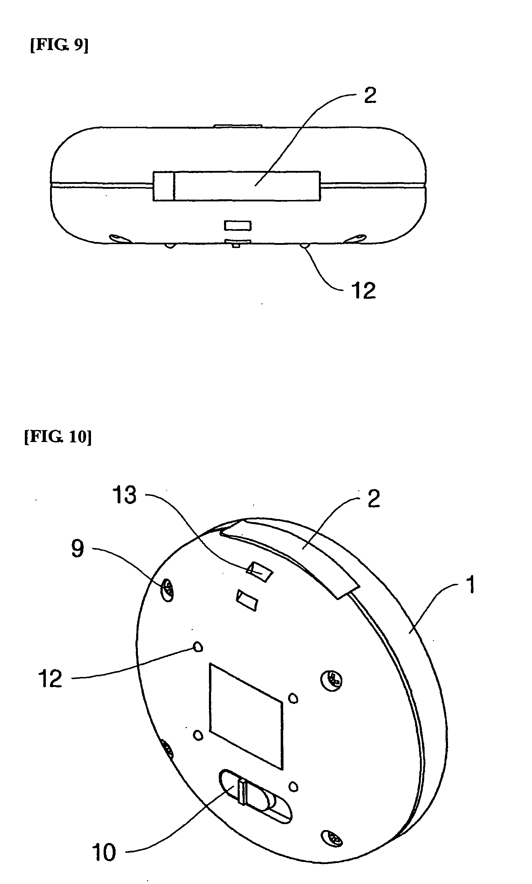

A housing 1 for accommodating the inner circuit unit 50 and the secondary electrical cell 60 is shown in a front view in FIG. 5 and in a side view in FIG. 7, in accordance with the first embodiment of the present invention. FIG. 6 and 8 show a housing 1 according to the second embodiment of the present invention in a front view and a perspective view, respectively. FIG. 9 is a side view showing a housing structure that is employed in both of the embodiments.

As seen in the drawings, the housing 1 comprises an upper housing pane 1a and a lower housing pane 1b, which are fixedly combined with each other by a fixture. The housing 1 has a diameter ranging from 6 to 8 cm such that it can be held in one hand. In one side of the housing 1, the input connection port 2 is provided for an input cable 18 extending from the external adaptor 21, whereas the output connection port 6 is provided for an output cable 14 connecting to a mobile phone.

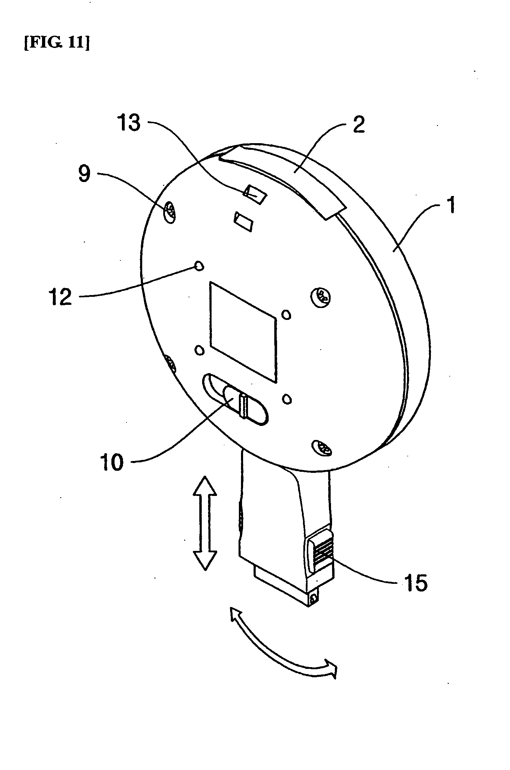

FIGS. 10 and 11 are views showing rear sides of the housings 1 in accordance with the first and the second embodiment of the present invention, respectively. As seen in the drawings, the upper housing pane 1a is tightened to the lower housing pane 1b using a screw engagement 9. On the rear side of the housing 1, a plurality of protrusions 12 is formed in order to protect the rear surface of the housing and an information sheet, e.g., specification notice, attached to the rear side, against damages. Typically, the user lays the mobile charger on the floor, with a surface having the information notice attached thereto serving as the bottom facing toward the floor. Thus, the surface facing toward the floor needs to be protected. In addition, the protrusions 12 are very useful because the information notice provides important information.

Also, a landyard loop 13 is formed in a portion of the housing 1, particularly, on the rear side, so as to allow a string to be connected thereto. Thus, the housing 1 can be hung on the neck.

Serving to switch the inner circuit unit 50 on/off, an external ON/OFF switch 10 is provided on one surface of the housing 1. The switch 10 is moved in a lateral direction so as to switch the inner circuit unit 50 on/off The charge indicating circuit unit 93 is electrically connected with a charge indicator 8 on a surface of the housing 1. The inner circuit unit 50 works only when the switch 10 is in an ON state, but does not work when the switch 10 is in an OFF state. The ON/OFF switch 10 and the charge indicator 8 may both be formed on the same surface of the housing 1 or on different sides, for example, on the upper housing pane 10a and the lower housing pane 10b, respectively.

The charge indicator 8 may be composed of a light emitting diode which emits light of different colors according to the charging current detected at the output circuit unit 90. For instance, when the charged power passes through the output circuit unit 90 due to the discharge of the secondary electrical cell 60 to conduct quick charging, the charge indicator 8 emits red light. When the charged amount of the battery reaches a predetermined value to complete the charging, the charge indicator 8 emits green light. If the power of the secondary electrical cell 60 is lower than a predetermined value, the charge indicator 8 emits yellow light

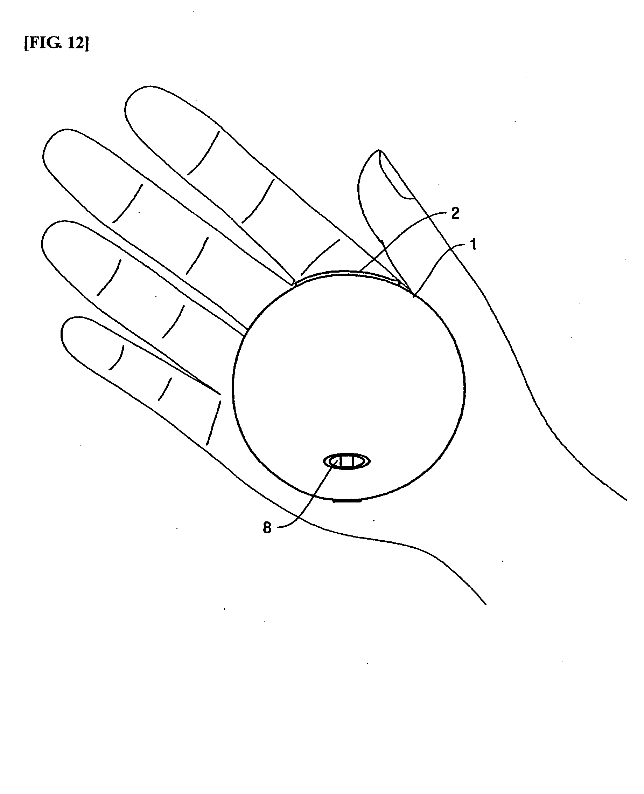

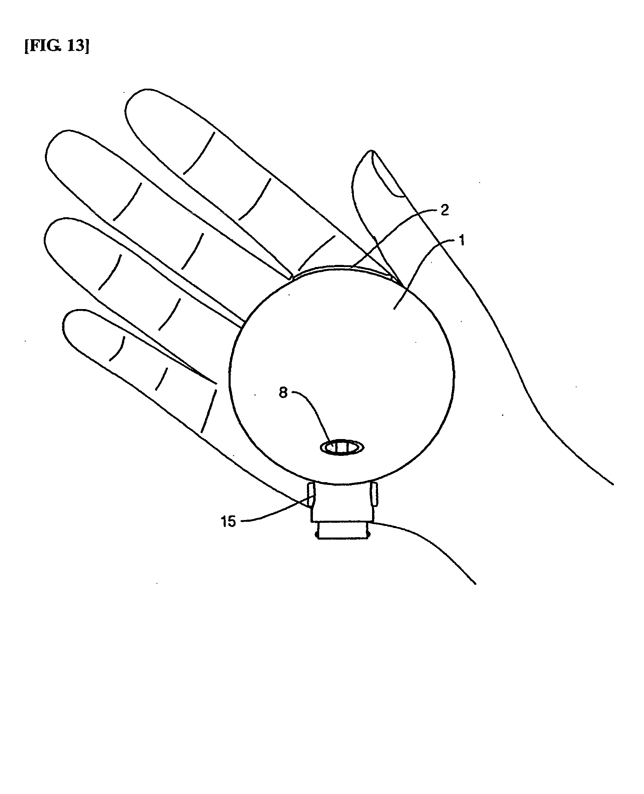

FIGS. 12 and 13 show mobile chargers according to the present invention, which are small enough to be held in one hand. As seen in these figures, the mobile chargers of the present invention are designed to be convenient to carry in the hand or in a pocket

As will be described below, the output connection port 6, through which the inner circuit unit 50 is connected to a mobile phone so as to supply the charged power of the secondary electrical cell 60 to the mobile phone, is a basic difference between the first and the second embodiment of the present invention.

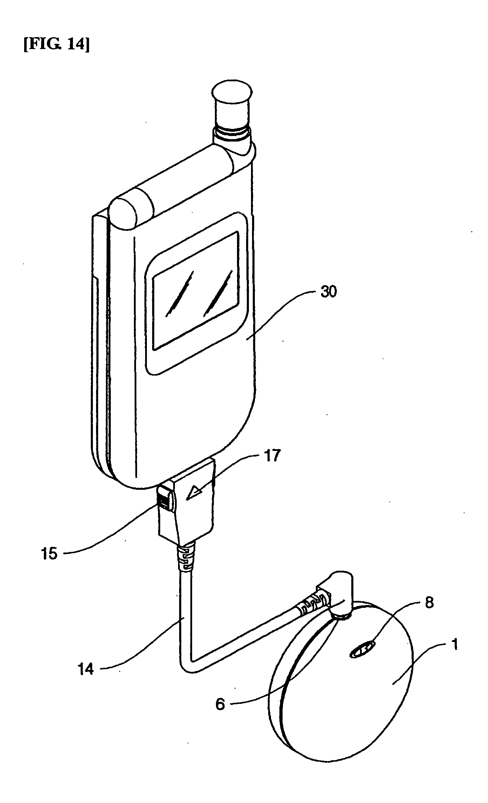

FIG. 14 shows a mobile charger according to the first embodiment of the present invention, applied to a mobile phone 30.

In the first embodiment, the mobile charger and the mobile phone are connected to each other through an output cable 14. Responsible for the transfer of data from/to and the supply of power to the mobile phone, one end of the output cable 14 is connected with an external connector provided with a plurality of contact pins. The other end of the output cable 14, having a cylindrical protrusion shape 16, is connected to the output connection port 6 of the housing 1. Correspondingly, the output connection port 6 has an output groove 7 formed therein, into which the cylindrical protrusion shape 16 is inserted, whereby the output groove 7 is electrically connected to the inner circuit unit 50 to supply a constant current and a constant voltage to an interior circuit of the mobile phone through the output cable 14.

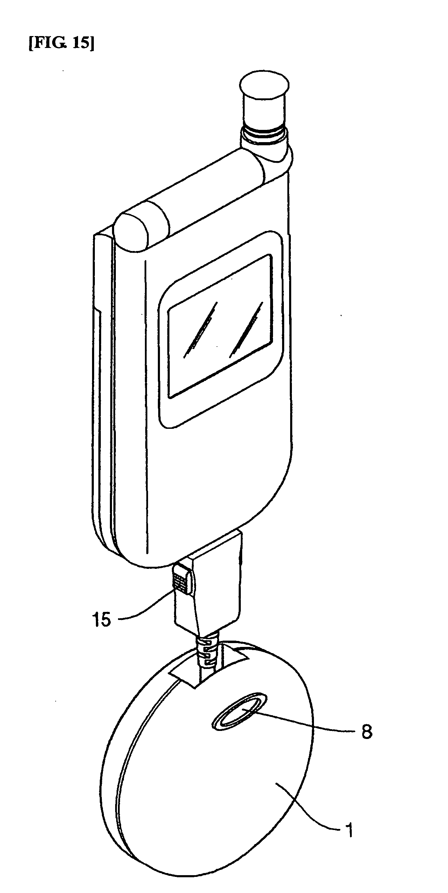

FIG. 15 shows a mobile charger according to the second embodiment of the present invention, applied to a mobile phone 30.

In the second embodiment, an output cable 14 privided separately from the housing 1 is not needed because the output connection port 6 is integrated with the housing 1. However, a means for connecting to an outer connector of the mobile phone 30 is required, as in the first embodiment. Preferably, as seen in the figure, the connection means, integrated with the housing 1, comprises a protruding end to be inserted into the external connector of the mobile phone and a small housing including a press holder for restricting the insertion into the external connector. Within the small housing, a plurality of connection pins, for connecting to the external connector, is present

In the second embodiment, because the output connection port 6 is an embedded type, it can be accommodated within the housing 1 when the mobile phone 30 is not charged. Thus, the housing 1 of the second embodiment looks like that of the first embodiment. In order to charge the mobile phone 30, the output connection port 6 is drawn out of the housing and connected to the external connector of the mobile phone 30.

Additionally, after being drawn out of the housing 1, the output connection port 6 of the second embodiment is designed to move at any angle so as to be convenient for the user to handle.

Preferably, the output connection port 6 of the second embodiment is a standard 24-pin type.

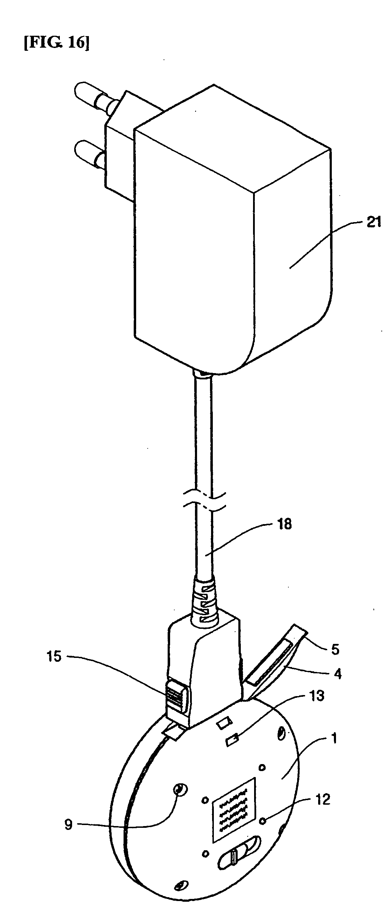

FIG. 16 shows a mobile charger in accordance with the present invention, which is being charged using an external adaptor 21.

As seen in the figure, the mobile charger and the external adaptor 21 are connected to each other through an input cable 18. The input cable 18 has one end connected to the external adaptor 21 and the other end inserted into the input connection port 2 formed in one side of the housing 1. For the connection to the input connection port 2, the input cable has a protruding end 19. Correspondingly, the input connection port 2 has an input groove 3 for fitting to the protruding end 19, in which a plurality of connection pins is provided for electrically connecting to the inner circuit unit 50. Accordingly, the embedded secondary electrical cell 60 is charged through the electrical connection between the input cable 18 and the input connection port 2.

The input connection port 2 is provided with a protection piece 4 for protecting the input groove 3 and the connection pins. The protection piece 4 is fixed to the housing 1 at one end while being detachably attached to the housing 1 at the other end. This free end is provided with a grip 5, which is pulled to open the input connection port to insert the input cable 18 therein so as to charge the secondary electrical cell 60. This structure is depicted in detail in FIG. 7.

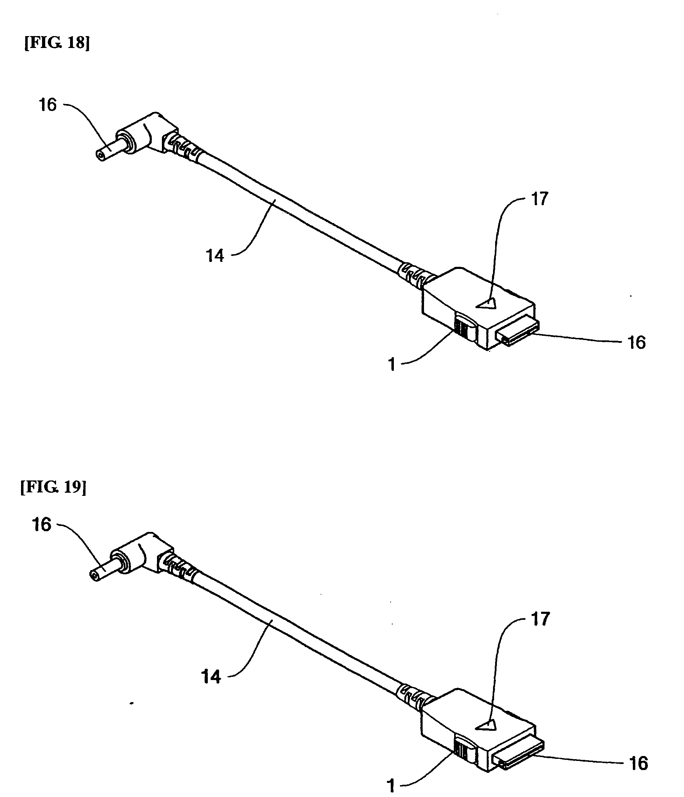

With reference to FIGS. 18 to 20, there are input/output cables applicable to the present invention.

FIGS. 18 and 19 show output cables 14 useful in the first embodiment of the present invention. Each of the output cables 14 has one cylindrical end to be inserted into the corresponding cylindrical output groove 7 (thus, the cylindrical end has an outer diameter smaller than the inner diameter of the output groove 7). At the other end, the output cable 14 has a small housing comprising a protruding end to be inserted into the external connector of the mobile phone, a press holder 15 for restricting the insertion into the external connector, and a charge indicator, composed of LEDs, for indicating charging progress upon the supply of electrical power from the secondary electrical cell 60. The output cables 14 of FIGS. 18 and 19 are for use in the external connectors of an 18- and a standard 24-pin type connector, respectively. Thus, an appropriate output cable 14 can be provided according to the connection pin type of the external connector in accordance with the present invention. For example, the output cable 14 of FIG. 18 is connected to the output connection port 6 when the external connector of the mobile phone to be charged is an 18-pin type. On the other hand, the output cable 14 of FIG. 19 is connected to the output connection port 6 when the external connector of the mobile phone is a 24-pin type. The output cables 14, whatever type, have the same cylindrical protrusion structure at the other end and thus are compatible with each other. This is economically favorable in terms of design and production of the output cables 14.

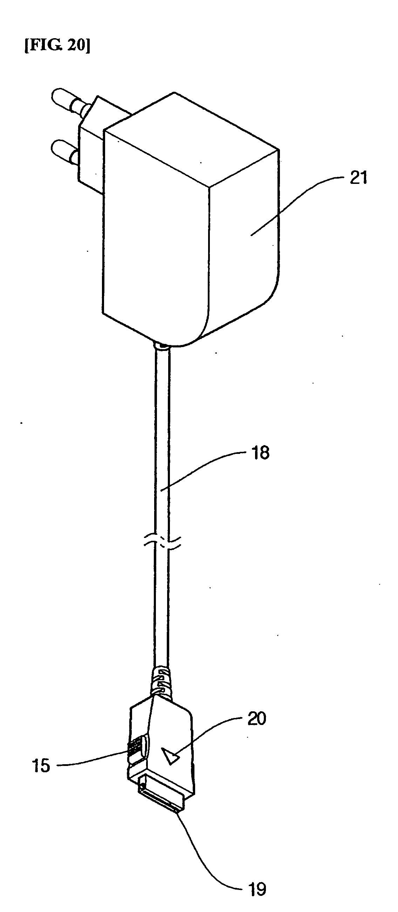

FIG. 20 shows an input cable 18. At one end, the input cable 18, as seen in the figure, has a small housing comprising a protruding end of a standard 24-pin type for insertion fitting to the input groove 3, a press holder 15 for restricting the insertion of the protruding end into the input groove 3, and an input cable charge indicator 20 for indicating the charged state of the secondary electrical cell 60. The other end of the input cable 18 is electrically connected to the external power adaptor 21. Having the same structure as the 24-pin output cable 14 at one end, the input cable 18 can be produced at low cost and is compatible with those of any manufacturer if they are the standard 24-pin type.

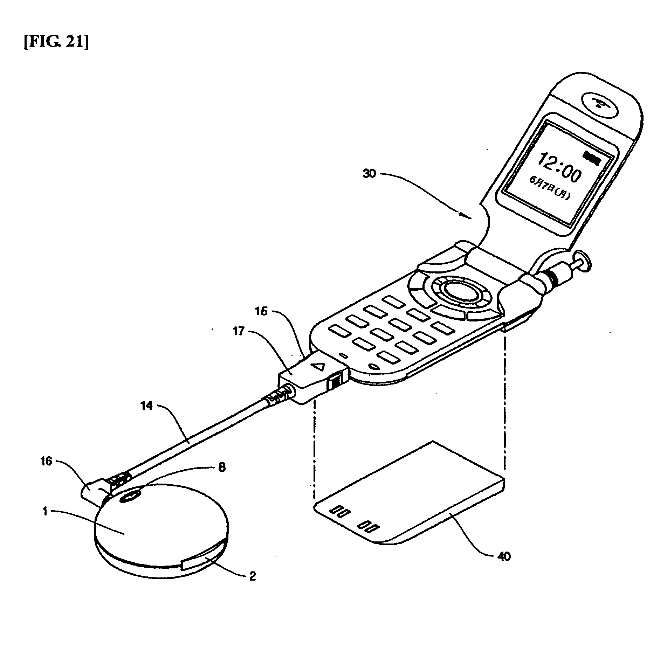

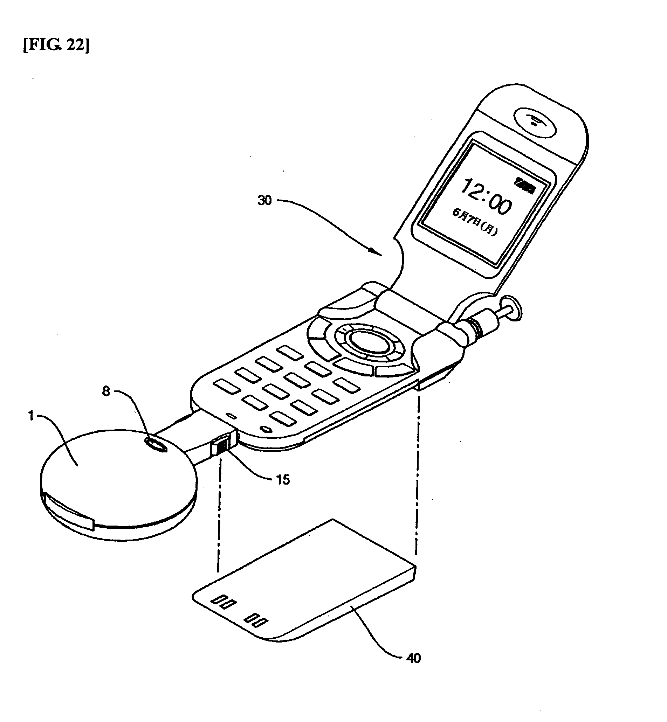

FIGS. 21 and 22 show a mobile phone that is not turned off but can be operated even when its battery has been removed if the mobile chargers have been applied thereto, in accordance with the first and the second embodiment of the present invention.

In charging a mobile phone with external electrical power, the mobile charger of the present invention not only supplies the charged electric power of the embedded secondary electrical cell 60 through the external connector of the mobile phone to the inner circuit of the mobile phone so as to drive the mobile phone, but also charges the battery mounted on the mobile phone through the inner circuit, in contrast to the conventional charger comprising a stationary main body, which directly charges the battery mounted thereon. This is possible because the output circuit unit 90 converts the DC voltage boosted in the DC/DC converter circuit module 80 into a constant voltage/current necessary for the drive power for the mobile phone and supplies the constant voltage/current as drive power through the output cable 14 and the external connector to the mobile phone.

Therefore, even if the battery is removed, the drive power continues to be supplied so that the mobile phone can be used.

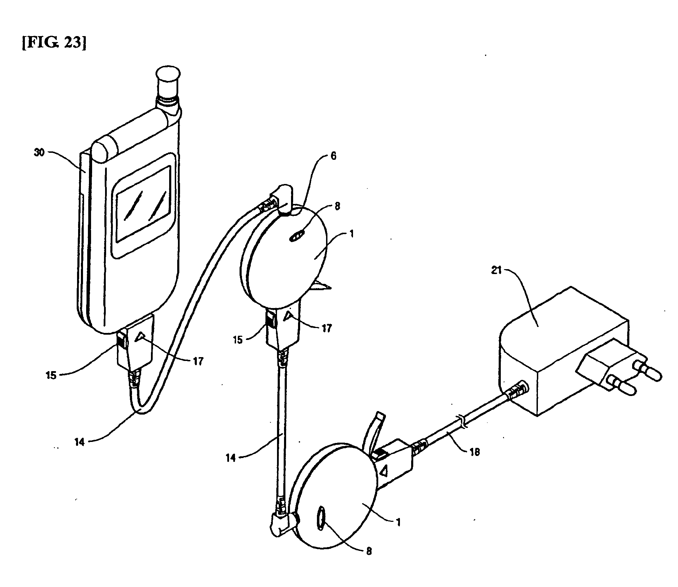

FIG. 23 shows a dual charging scheme in which a mobile phone can be charged using two mobile chargers connected in series. This scheme is not limited to the second embodiment, but is applicable to the first embodiment.

Although the preferred embodiment of the present invention has been disclosed for illustrative purposes, those skilled in the art will appreciate that various modifications, additions and substitutions are possible, without departing from the scope and spirit of the invention as disclosed in the accompanying claims.

**Claims**

1. A mobile charger, comprising:

a housing, composed of an upper body and a lower body, which are fixed to each other through a fixing engagement, having a size small enough to carry in one hand;
a secondary electrical cell embedded within the housing:

an inner circuit unit, installed within the housing, comprising:

a charging circuit unit for supplying external electrical power to the secondary electrical cell,
a protection circuit module for protecting the secondary cell,
a DC/DC converter circuit module for boosting the voltage of the secondary cell to a predetermined voltage,
an output circuit unit for converting the DC voltage boosted in the DC/DC converter circuit module to a predetermined constant voltage/current;
a first connection port, formed in one side of the housing, electrically connected to the inner circuit unit, in which a groove is formed for insertion fitting with a protrusion end of an input cable for charging the secondary electrical cell;
a second connection port, formed in one side of the housing, electrically connected to the inner circuit unit, in which a groove is formed for insertion fitting to a cylindrical protrusion end of an output cable for supplying charged power of the secondary electrical cell to a portable electronic device; and
a charge indicator, formed on a surface of the housing, for indicating a charged state of the electronic device by detecting the charging current flowing out of the inner circuit unit

2. A mobile charger, comprising:

a housing, composed of an upper body and a lower body, which are fixed to each other through a fixing engagement, having a size small enough to carry within one hand;
a secondary electrical cell embedded within the housing:

an inner circuit unit, installed within the housing, comprising:

a charging circuit unit for supplying external electrical power to the secondary electrical cell,
a protection circuit module for protecting the secondary cell,
a DC/DC converter circuit module for boosting the voltage of the secondary cell to a predetermined voltage,
an output circuit unit for converting the DC voltage, boosted in the DC/DC converter circuit module, to a predetermined constant voltage/current;
a first connection port, formed in one side of the housing, electrically connecting to the inner circuit unit, in which a groove is formed for insertion fitting with a protrusion end of an input cable for charging the secondary electrical cell;
a second connection port, formed integrally with the housing, electrically communicating with the inner circuit unit and directly connecting to an external connector of a portable electronic device so as to supply charged power of the secondary electrical cell to the portable electronic device; and
a charge indicator, formed on a surface of the housing, for indicating a charged state of the electronic device by detecting the charging current flowing out of the inner circuit unit.

3. The mobile charger as set forth in claim 1 or 2, wherein either the upper housing body or the lower housing body is defined as a first housing body when the charge indicator is formed thereon, and the other housing body is defined as a second housing body, the fixing engagement is a screw, which protrudes from the second housing body, and the second housing body is provided with at least three protrusions thereon, so as to protect the surface thereof, and an information notice attached thereto.

4. The mobile charger as set forth in claim 3, wherein the first housing body has the charge indicator formed thereon, the second housing body has a switch unit thereon for switching on/off output power of the mobile charger, said charge indicator performing an indicating function when said switch unit is in an on state and not performing the indicating function when said switch unit is in an off state.

5. The mobile charger as set forth in claim 1 or 2, wherein the charge indicator is composed of light emitting diodes and, during the supply of the charged power of the secondary electrical cell to the portable electronic device, emits red light in the case of quick charging, green light in the case of the completion of charging, and yellow light in the case that the power of the secondary cell is lower than a predetermined value.

6. The mobile charger as set forth in claim 1 or 2, wherein the first connection port has connection pins in the groove and is provided with a protection piece for protecting the groove and the connection pins, said protection piece being fixed to the housing at one end while being detachably attached to the housing at the other end, and being provided with a grip on the free end, said grip being pulled to open the input connection port to insert the input cable therein so as to charge the secondary electrical cell.

7. The mobile charger as set forth in claim 1 or 6, wherein the input cable is a standard 24-pin type charging cable which has a small housing at one end and is electrically connected at the other end to an external adaptor, said small housing comprising a protrusion end of a standard 24-pin type for insertion fitting to the groove, a press holder for restricting the insertion of the protrusion end into the groove, and a charge indicator for indicating the charged state of the secondary electrical cell.

8. The mobile charger as set forth in claim 6, wherein the connection pins formed in the first connection port are standard 24-pin type.

9. The mobile charger as set forth in claim 1, further comprising an outer cable to be insertion fitted into the groove of the second connection port, said outer cable having a small housing at one end and a cylindrical protrusion end at the other end, said small housing comprising a protrusion end to be inserted into the external connector of the portable electronic device, a press holder for restricting the insertion into the external connector, and a charge indicator for indicating charging progress upon the supply of electrical power from the secondary electrical cell, said small housing being connected with an external connector responsible for the transfer of data to/from, and the supply of power to, the portable electronic device, said cylindrical protrusion end having an outer diameter smaller than an inner diameter of the groove so as to be inserted into the groove.

10. The mobile charger as set forth in claim 2, wherein the second connection port is integrated with the housing and embedded in the housing.

11. The mobile charger as set forth in claim 10, wherein the second connection port is designed to move in any direction and to readily be pushed into and pulled out of the housing, thereby being freely connected to the external connector of the portable electronic device.

12. The mobile charger as set forth in one of claims 2, 10 and 11, wherein the second connection port comprises a small housing that includes a protrusion end to be insertion fitted into the external connector of the portable electronic device and a press holder for restricting the insertion of the protrusion end.

13. The mobile charger as set forth in claim 1 or 2, wherein the output circuit unit within the inner circuit unit converts DC voltage boosted in the DC/DC converter circuit module to a constant voltage/current necessary for the drive power for the mobile phone and supplies the constant voltage/current as a drive power through the output cable and the external connector of the portable electronic device to an inner circuit of the portable electronic device, whereby the portable electronic device can be charged and perform its characteristic functions even when a battery mounted on the electronic device is removed therefrom.

14. The mobile charger as set forth in claim 9, wherein the output cable is either an 18-pin type or a 24-pin type, and is used depending on the pin type of the external connector of the portable electronic device.

[FIG. 1]

**[FIG. 2]**

[FIG. 3]

[FIG. 4]

[FIG. 5]

[FIG. 6]

[FIG. 7]

[FIG. 8]

[FIG. 9]

[FIG. 10]

[FIG. 11]

[FIG. 12]

[FIG. 13]

EP 1 610 438 A2

[FIG. 14]

22

[FIG. 15]

[FIG. 16]

[FIG. 17]

[FIG. 18]

[FIG. 19]

[FIG. 20]

**[FIG. 21]**

[FIG. 22]

[FIG. 23]